# EUROPÄISCHE PATENTANMELDUNG

(11) **EP 1 245 452 A1**
(43) Veröffentlichungstag der Anmeldung: **02.10.2002**
(21) Anmeldenummer: 01108180.9
(22) Anmeldetag: 30.03.2001
(51) Int. Cl.: B60R 16/02

(54) **Fahrzeug-Bordnetzsystem, insbesondere für einen Lastkraftwagen**

(71) Anmelder: SIEMENS AKTIENGESELLSCHAFT, 80333 München (DE)
(72) Erfinder: Götze, Thomas, 09113 Chemnitz (DE); Johanning, Hans-Peter, 97299 Zell am Main (DE)

(57) **Zusammenfassung**

Um mit geringem Fertigungs- und Schaltungsaufwand einerseits in dem Fahrzeug-Bordnetzsystem eine an eine höhere Spannung gebundene hohe Startleistung für einen mit einem Verbrennungsmotor gekoppelten Starter-Generator (SG) und andererseits eine volle Kompatibilität mit Bordnetz-Verbrauchern (VB) niederer Spannung gewährleisten zu können, sind zwei Energiespeicher (B1 bzw.B2) niederer Spannung vorgesehen, die einerseits einzeln oder in Parallelschaltung mit niederer Spannung zur Versorgung der Bordnetz-Verbraucher (VB) dienen und die andererseits zumindest bei einem Kaltstart des Starter-Generators (SG) in Serien-Schaltung die hohe Startleistung mit höherer Spannung und entsprechend reduzierter Stromstärke gewährleisten.

## Beschreibung

Die Erfindung bezieht sich auf ein Fahrzeug-Bordnetzsystem, insbesondere für einen Lastkraftwagen, gemäß Patentanspruch 1; ein Fahrzeug-Bordnetzsystem mit den ersten drei Teilmerkmalen des Anspruchs 1 ist z.B. aus der DE 197 52 661 A1 bekannt.

Fahrzeug-Bordnetzsystem mit einem an eine Verbrennungsmaschine koppelbaren Starter-Generator für Personenkraftwagen weisen im allgemeinen eine 12/14V und eine 36/42V-Spanungsebene auf; die Einführung einer 36/42V-Spannungsebene stellt eine Antwort auf den steigenden Energiebedarf im Kraftfahrzeug, insbesondere auch zum Kaltstarten des Starter-Generators, dar; infolge der dadurch verringerbaren Stromstärke können kleinere Wicklungsquerschnitte für die Maschinenauslegung des Starter-Generators gewählt und die Verluste im halbleiterbestückten Wechselrichter zwischen dem Starter-Generator und der Gleichspannungsebene gemindert werden.

Für Lastkraftwagen bzw. Nutzfahrzeuge ist die 24/28V-Spannungsebene, auch aus Gründen der Kompatibilität zwischen herstellerspezifischen Zugmaschinen und verschiedenartigen Anhängern, als Standard eingeführt. Aus technisch-wirtschaftlichen Gründen ist nicht zu erwarten, dass in absehbarer Zeit eine 36/42V-Spannungsebene zusätzlich eingeführt wird.

Zur Erzielung einer gegenüber der niederen Bordnetzspannung höheren, zum Start eines Startergenerators vorteilhaften Spannung sind zwei Wege denkbar. Ausgehend von einem Energiespeicher niederer Spannung ist ein halbleiterbestückter Hochsetzsteller vorgesehen, der die Spannung zur Speisung des Starter-Generators erhöht, u.U. unter Verwendung eines Start-Kondensators z.B. gemäß der eingangs genannten DE 197 52 661 A1. Alternativ dazu wäre es möglich, ausgehend von einem Energiespeicher höherer Spannung über einen halbleiterbestückten DC-DC-Wandler die Verbraucher niederer Spannung zu versorgen.

Gemäß Aufgabe vorliegender Erfindung soll ein mit geringem Aufwand fertigbares und betreibbares Fahrzeug-Bordnetzsystem geschaffen werden, welches das Starten des Starter-Generators mit nicht übermäßig hohen Stromstärken erlaubt und trotzdem auch kompatibel zum bestehenden niederen Spannungsniveau, insbesondere 24/28V für Lastkraftwagen, Verbraucher niederer Spannung versorgen kann.

Die Lösung der Aufgabe gelingt erfindungsgemäß mit einem Fahrzeug-Bordnetzsystem gemäß Patentanspruch 1; vorteilhafte Ausgestaltungen der Erfindung sind jeweils Gegenstand der Unteransprüche.

Durch die bedarfsangepasste Serien- bzw. Parallelschaltung der beiden Energiespeicher kann ausgehend von einer kompatiblen Grund-Spannungsebene niederer, den Erfordernissen der Bordnetzverbrauchern entsprechender, Spannung (z.B. 24/28V) trotzdem beim Start, insbesondere beim Kaltstart, des üblicherweise mit einer Verbrennungsmaschine gekoppelten Starter-Generators lediglich durch Betätigen von Schaltern, d.h. unter Verzicht auf Hochsetzsteller bzw. ansonsten nicht oder nur unter Verwendung von DC/DC-Stellern einsetzbarer Hochspannungs-Energiespeicher, eine vorteilhaft merklich höhere Start-Spannung (z.B. 48/56V) erreicht werden; bei gleicher Drehzahl und gleichem Drehmoment ergibt sich ein geringerer Wicklungsstrom für den Starter-Generator, ein geringerer Ausgangsstrom des Wechselrichters bzw. ein verminderter Belastungsstrom für den bzw. die Energiespeicher. Die zur Serienbzw. Parallelschaltung notwendigen Schaltmittel sind aufwandsarm herstellbar und einfach ansteuerbar.

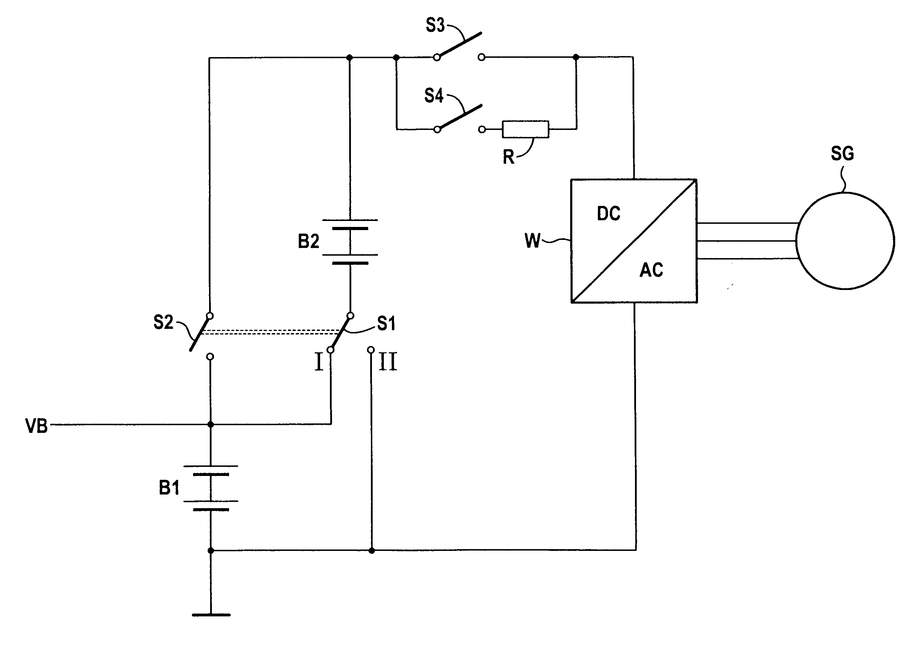

Die Erfindung wird im folgenden anhand eines in der Figur schematisch dargestellten Ausführungsbeispiels näher erläutert.

Die Figur zeigt ein Fahrzeug-Bordnetzsystem mit einem üblicherweise mit einer Verbrennungsmaschine gekoppelten Starter-Generator SG, der über einen Wechselrichter W mit Zwischenkreiskondensator und über Schaltmittel S1 bis S3 an eine Serien- bzw. Parallelschaltung von zwei Energiespeichern (B1;B2) niederer Spannung anschließbar ist, von denen zumindest einer in Speiseverbindung mit Bordnetz-Verbrauchern VB der niederen Spannung stellbar ist.

Ein Bordnetz-Energiespeicher B1, insbesondere eine Fahrzeug-Batterie, speist eine Haupt-Spannungsebene niederer Spannung, insbesondere 24/28V, zur Versorgung von üblichen Bordnetz-Verbrauchern VB. Mit diesem Bordnetz-Energiespeicher B1 ist bei Schalterstellung eines Umschalters S1 in Schaltstellung I und bei Öffnungsstellung eines ersten Ein-Aus-Schalters S2 ein, vorteilhaft gleichartiger, Zusatz-Energiespeicher B2 niederer Spannung, insbesondere 24/28V, in Serie schaltbar, derart dass der Starter-Generator SG mit entsprechend, durch Verdopplung merklich, erhöhter Spannung und damit vermindertem Strom, insbesondere in einer Kalttemperaturphase, gestartet werden kann.

Durch Umlegen des Umschalters S1 in seine Schaltstellung II und Schließen des ersten Ein-Aus-Schalters S2 ist der Zusatz-Energiespeicher B2 zu dem Bordnetz-Energiespeicher B1 parallel schaltbar, derart dass einerseits im Generator-Betrieb des Starter-Generators SG beide oder zumindest einer der beiden Energiespeicher mit direktem Leistungsfluss über den Wechselrichter W rückspeisbar bzw. die Bordnetz-Verbraucher VB direkt einspeisbar sind und dass andererseits im Starter-Betrieb des Starter-Generators SG dieser in einer Warmtemperaturphase aus den parallel geschalteten Energiespeichern B1; B2 ohne Umschaltmaßnahmen unmittelbar mit niederer Spannung speisbar ist. Besonders vorteilhaft ist der erzielbare hohe Wirkungsgrad im Generatorbetrieb, da im Vergleich zu bekannten Lösungen eine verlustbehaftete Umwandlung bzw. gegenseitige Anpassung der unterschiedlichen Spannungsebenen, z.B. über DC/DC-Wandler, nicht notwendig ist.

Ein zweiter Ein-Aus-Ausschalter S3 sowie ein dazu parallel schaltbarer Schutzwiderstand R dienen in vorteilhafter Weise dazu, hohe stoßartige Lade- bzw. Entladestrombelastungen bei einer Serien-Parallel- bzw. Parallel-Serienumschaltung der Energiespeicher B1; B2 vom Zwischenkreiskondensator des Wechselrichters W fernzuhalten; dementsprechend ist vorgesehen, vor einer beabsichtigten Energiespeicher-Umschaltung zunächst den zweiten Ein-Aus-Schalter S3 zu öffnen und über den Parallelstrompfad mit dem Schutzwiderstand R den Lade- bzw. Entladestrom zu begrenzen. Ein in Reihe mit dem Schutzwiderstand R vorgesehener dritter Ein-Aus-Schalter S4 erlaubt, z.B. bei längeren Betriebsunterbrechungen oder im Fehlerfall, den Schutzwiderstand R bzw. den Wechselrichter W ganz vom Bordnetzsystem zu trennen.

Für den Umschalter S1 bzw. die Ein-Aus-Schalter S2 bis S4 sind in besonders aufwandsarmer Weise elektromechanisch betätigte Kontakte, insbesondere Relais oder Schütze einsetzbar; werden Halbleiterschalter verwendet, so sind zweckmäßigerweise für den Umschalter S1 und den ersten Ein-Aus-Schalter S2 solche mit strombegrenzender Wirkung vorzusehen, so dass sich die Zuschaltung eines gesonderten Schutzwiderstandes R erübrigen kann.

Der grundsätzliche Lösungsgedanke lässt sich wie folgt zusammenfassen:

Um mit geringem Fertigungs- und Schaltungsaufwand einerseits in dem Fahrzeug-Bordnetzsystem eine an eine höhere Spannung gebundene hohe Startleistung für einen mit einem Verbrennungsmotor gekoppelten Starter-Generator (SG) und andererseits eine volle Kompatibilität mit Bordnetz-Verbrauchern (VB) niederer Spannung gewährleisten zu können, sind zwei Energiespeicher (B1 bzw.B2) niederer Spannung vorgesehen, die einerseits einzeln oder in Parallelschaltung mit niederer Spannung zur Versorgung der Bordnetz-Verbraucher (VB) dienen und die andererseits zumindest bei einem Kaltstart des Starter-Generators (SG) in Serien-Schaltung die hohe Startleistung mit höherer Spannung und entsprechend reduzierter Stromstärke gewährleisten.

## Patentansprüche

1. Fahrzeug-Bordnetzsystem, insbesondere für einen Lastkraftwagen
- mit einem Bordnetz-Energiespeicher (B1), insbesondere einer Fahrzeug-Batterie, niederer Spannung (z.B. 24/28V),
- mit aus dem Bordnetz-Energiespeicher (B1) speisbaren Bordnetz-Verbrauchern niederer Spannung (z.B. 24/28V),
- mit einem Starter-Generator (SG), der im Starter-Betrieb aus dem Bordnetz-Energiespeicher (B1) speisbar ist und im Generator-Betrieb in den Bordnetz-Energiespeicher (B1) rückspeist,
- mit einem Zusatz-Energiespeicher (B2) niederer Spannung (z.B. 24/28V), der zum Starter-Betrieb des Starter-Generators (SG) im Sinne einer entsprechend höheren Spannung (z.B. 48/56V) zu dem Bordnetz-Energiespeicher (B1 in Serie zuschaltbar bzw. im Generator-Betrieb des Starter-Generators (SG) im Sinne der niederen Spannung zu dem Bordnetz-Energiespeicher (B1) parallelschaltbar ist.

2. Fahrzeug-Bordnetzsystem nach Anspruch 1
- mit einer Ausbildung des Zusatz-Energiespeichers (B2) in Form einer zweiten, im wesentlichen zu dem ersten Energiespeicher (B1) gleichartigen Batterie.

3. Fahrzeug-Bordnetzsystem nach Anspruch 1
- mit einer Ausbildung des Zusatz-Energiespeichers (B2) in Form eines Kondensators, insbesondere eines Doppelschicht-Kondensators.

4. Fahrzeug-Bordnetzsystem nach zumindest einem der Ansprüche 1 bis 3
- mit einer Speiseanschluss-Verbindung des Bordnetz-Energiespeichers (B1) zu den Bordnetz-Verbrauchern (VB) auch während der Serienzuschaltung zu dem Zusatz-Energiespeicher (B2).

5. Fahrzeug-Bordnetzsystem nach zumindest einem der Ansprüche 1 bis 4
- mit einem Starter-Generator (SG) und einem, einen Zwischenkreiskondensator enthaltenden, Wechselrichter (W),
- mit einer zeitweisen Vorschaltung eines Schutzwiderstandes (R) in der Verbindung zwischen dem Wechselrichter (W) und dem Zusatz-Energiespeicher (B2) vor dessen Serien- bzw. Parallelumschaltung.

6. Fahrzeug-Bordnetzsystem nach zumindest einem der Ansprüche 1 bis 5
- mit einer Serien- bzw. Parallelumschaltung des Zusatz-Energiespeichers (B2) über Schalter in Form von elektromechanisch betätigten Schaltern, insbesondere Relais und/oder Schützen.

7. Fahrzeug-Bordnetzsystem nach zumindest einem der Ansprüche 1 bis 6
- mit einer Serien- bzw. Parallelumschaltung des Zusatz-Energiespeichers (B2) über Schalter in Form von Halbleiter-Schaltern, insbesondere von strombegrenzenden Halbleiter-Schaltern.

8. Fahrzeug-Bordnetzsystem nach zumindest einem der Ansprüche 1 bis 7
- mit einer Serienschaltung des Bordnetz-Energiespeichers (B1) und des Zusatz-Energiespeichers (B2) im Fall eines Kaltstarts des Starter-Generators (SG).

9. Fahrzeug-Bordnetzsystem nach zumindest einem der Ansprüche 1 bis 8
- mit einer Parallel-Schaltung des Bordnetz-Energiespeichers (B1) und des Zusatz-Energiespeichers (B2) im Fall eines Warmstarts des Starter-Generators (SG).

10. Fahrzeug-Bordnetzsystem nach zumindest einem der Ansprüche 1 bis 9
- mit einer Parallel-Schaltung des Bordnetz-Energiespeichers (B1) und des Zusatz-Energiespeichers (B2) im Fall des Generatorbetriebs des Starter-Generators (SG).

## Geänderte Patentansprüche

### Geänderte Patentansprüche gemäss Regel 86(2) EPÜ.

**1.** Fahrzeug-Bordnetzsystem, insbesondere für einen Lastkraftwagen
- mit einem Bordnetz-Energiespeicher (B1), insbesondere einer Fahrzeug-Batterie, niederer Spannung (z.B. 24/28V),
- mit aus dem Bordnetz-Energiespeicher (B1) gespeisten Bordnetz-Verbrauchern niederer Spannung (z.B. 24/28V),
- mit einem Starter-Generator (SG), der im Starter-Betrieb aus dem Bordnetz-Energiespeicher (B1) speisbar ist und im Generator-Betrieb in den Bordnetz-Energiespeicher (B1) rückspeist,
- mit einem Zusatz-Energiespeicher (B2) niederer Spannung (z.B. 24/28V), der im Starter-Betrieb des Starter-Generators (SG) im Sinne einer entsprechend höheren Spannung (z.B. 48/56V) für den Starter-Generator zu dem Bordnetz-Energiespeicher (B1) in Serie zuschaltbar bzw. im Generator-Betrieb des Starter-Generators (SG) im Sinne der niederen Spannung zu dem Bordnetz-Energiespeicher (B1) parallelschaltbar ist.

**2.** Fahrzeug-Bordnetzsystem nach Anspruch 1
- mit einer Ausbildung des Zusatz-Energiespeichers (B2) in Form einer zweiten, im wesentlichen zu dem ersten Energiespeicher (B1) gleichartigen Batterie.

**3.** Fahrzeug-Bordnetzsystem nach Anspruch 1
- mit einer Ausbildung des Zusatz-Energiespeichers (B2) in Form eines Kondensators, insbesondere eines Doppelschicht-Kondensators.

**4.** Fahrzeug-Bordnetzsystem nach zumindest einem der Ansprüche 1 bis 3
- mit einer Speiseanschluss-Verbindung des Bordnetz-Energiespeichers (B1) zu den Bordnetz-Verbrauchern (VB) auch während der Serienzuschaltung zu dem Zusatz-Energiespeicher (B2).

**5.** Fahrzeug-Bordnetzsystem nach zumindest einem der Ansprüche 1 bis 4
- mit einem Starter-Generator (SG) und einem, einen Zwischenkreiskondensator enthaltenden, Wechselrichter (W),
- mit einer zeitweisen Vorschaltung eines Schutzwiderstandes (R) in der Verbindung zwischen dem Wechselrichter (W) und dem Zusatz-Energiespeicher (B2) vor dessen Serien- bzw. Parallelumschaltung.

**6.** Fahrzeug-Bordnetzsystem nach zumindest einem der Ansprüche 1 bis 5
- mit einer Serien- bzw. Parallelumschaltung des Zusatz-Energiespeichers (B2) über Schalter in Form von elektromechanisch betätigten Schaltern, insbesondere Relais und/oder Schützen.

**7.** Fahrzeug-Bordnetzsystem nach zumindest einem der Ansprüche 1 bis 6
- mit einer Serien- bzw. Parallelumschaltung des Zusatz-Energiespeichers (B2) über Schalter in Form von Halbleiter-Schaltern, insbesondere von strombegrenzenden Halbleiter-Schaltern.

**8.** Fahrzeug-Bordnetzsystem nach zumindest einem der Ansprüche 1 bis 7
- mit einer Serienschaltung des Bordnetz-Energiespeichers (B1) und des Zusatz-Energiespeichers (B2) im Fall eines Kaltstarts des Starter-Generators (SG).

**9.** Fahrzeug-Bordnetzsystem nach zumindest einem der Ansprüche 1 bis 8
- mit einer Parallel-Schaltung des Bordnetz-Energiespeichers (B1) und des Zusatz-Energiespeichers (B2) im Fall eines Warmstarts des Starter-Generators (SG).

**10.** Fahrzeug-Bordnetzsystem nach zumindest einem der Ansprüche 1 bis 9
- mit einer Parallel-Schaltung des Bordnetz-Energiespeichers (B1) und des Zusatz-Energiespeichers (B2) im Fall des Generatorbetriebs des Starter-Generators (SG).
